# EUROPEAN PATENT APPLICATION

(11) **EP 4 675 768 A1**
(43) Date of publication of application: **07.01.2026**
(21) Application number: 24186175.6
(22) Date of filing: 03.07.2024
(51) Int. Cl.: H01M 10/6567, B60L 50/64, H01M 10/48, H01M 10/625, H01M 10/613, H01M 10/627, H01M 10/63, H01M 50/204, A62C 3/07, H01M 10/42, A62C 3/16

(54) **A LIQUID RESERVOIR FOR THERMAL RUNAWAY MANAGEMENT**

(71) Applicant: VOLVO TRUCK CORPORATION, 405 08 Göteborg (SE)
(72) Inventor: LINDELÖW, Fredrik, 541 94 SKÖVDE (SE); TINGBERG, Tobias, 435 39 MÖLNLYCKE (SE)
(74) Representative: Ström & Gulliksson AB

(57) **Abstract**

A liquid reservoir (10) for thermal runaway management, comprising: a housing (20) adapted to accommodate a liquid coolant (12), the housing (20) comprising an outlet (22) to an interior (34) of a battery pack (30) comprising one or more battery modules (32), and an openable seal (24) arranged to seal the outlet (22), wherein in response to a thermal runaway event occurring in the battery pack (30), the openable seal (24) is configured to release accommodated liquid coolant (12) into the interior (34) of the battery pack (30), and wherein at least one of a volume of the housing (20) and a volume of the accommodated liquid coolant (12) is limited by a height limit (H) defined by a terminal circuit (36) of a lowest battery module (32-1) from among said one or more battery modules (32).

## Description

### TECHNICAL FIELD

The disclosure relates generally to thermal runaway management. In particular aspects, the disclosure relates to a liquid reservoir for thermal runaway management. The disclosure can be applied to heavy-duty vehicles, such as trucks, buses, and construction equipment, among other vehicle types. The disclosure can also be applied to other areas of application, such as marine vessels, industrial applications, stationary applications, among other areas of application. Although the disclosure may be described with respect to a particular vehicle, the disclosure is not restricted to any particular vehicle.

### BACKGROUND

With the recent focus on electric vehicles and devices as an alternative to fossil fuels, more and more battery packs are being used. Such battery packs may fail and overheat in a thermal runaway. This may in turn cause a chain reaction as the thermal runaway can spread to adjacent battery packs.

It is in view of the above observations and others the present inventors herein are suggesting one or more improvements to the prior art of thermal runaway management.

### SUMMARY

A liquid coolant that comes into contact with a terminal circuit may lead to the liquid coolant being subjected to chemical decomposition which can cause a buildup of hydrogen gas. The prior art therefore fails to suggest a satisfactory solution for managing thermal runaway events. A liquid reservoir is thus employed herein that is configured to open a seal to release liquid coolant into a battery pack in response to a thermal runaway event occurring within the battery pack.

According to a first aspect of the disclosure, a liquid reservoir is provided. The liquid reservoir comprises a housing adapted to accommodate a liquid coolant, the housing comprising an outlet to an interior of a battery pack comprising one or more battery modules, and an openable seal arranged to seal the outlet, wherein in response to a thermal runaway event occurring in the battery pack, the openable seal is configured to release accommodated liquid coolant into the interior of the battery pack, and wherein at least one of a volume of the housing and a volume of the accommodated liquid coolant is limited by a height limit defined by a terminal circuit of a lowest battery module from among said one or more battery modules.

The first aspect of the disclosure may seek to effectively manage thermal runaway events in battery packs. A technical benefit may include a careful control of liquid coolant volume in the battery pack based on the specific layout of the battery cell configuration, ensuring safe containment and effective cooling while mitigating the risk of potentially dangerous incidents. This ultimately offers an increased safety and reliability in the event of thermal runaway.

Optionally in some examples, including in at least one preferred example, the openable seal comprises a fusible material having a melting point or sublimation point corresponding to a temperature threshold. A technical benefit may include the ability to release liquid coolant at the specific temperature threshold. The temperature threshold may be decided beforehand, with knowledge of normally arising temperatures in the battery pack as well as temperatures that may arise during a thermal runaway.

Optionally in some examples, including in at least one preferred example, the openable seal completely covers the outlet. A technical benefit may include the ability to seal the outlet using only the openable seal with no further materials, which may be a cost-efficient solution.

Optionally in some examples, including in at least one preferred example, the fusible material is a wax material. A technical benefit may include the usage of a cheap and accessible material, which is easily applied to form a solid cover over the outlet.

Optionally in some examples, including in at least one preferred example, the liquid reservoir is arranged in the interior of the battery pack. A technical benefit may be the direct release of liquid to the interior, limiting the necessary amount of parts, as well as more efficient space utilization of an energy storage system.

Optionally in some examples, including in at least one preferred example, the liquid reservoir is arranged on an outside of the battery pack. A technical benefit may include a larger possible volume of liquid coolant in the interior of the battery pack and/or room for more e.g. battery cells, as the liquid reservoir is not taking up space within the battery pack.

Optionally in some examples, including in at least one preferred example, the outlet is arranged below the terminal circuit of the lowest battery module. A technical benefit may include a lower risk of liquid coolant splashing or otherwise coming in contact with the terminal circuit.

Optionally in some examples, including in at least one preferred example, the housing defines a volume where the liquid coolant is adapted to be accommodated, said volume being limited by the height limit. A technical benefit may include a more efficient use of space in the interior of the battery pack.

Optionally in some examples, including in at least one preferred example, a volume of liquid coolant is accommodated in the housing, and wherein the volume of liquid coolant is predetermined based on the height limit. A technical benefit may include the possibility of pre-manufacturing a liquid reservoir for a specific battery pack, which facilitates simple installation.

Optionally in some examples, including in at least one preferred example, the outlet is arranged adjacent to a bottom of the battery pack. A technical benefit may include a level of the released liquid coolant rising from the bottom of the battery pack rather than the released liquid coolant being released - e.g. sprinkled - from above, such as from above the battery module(s).

Optionally in some examples, including in at least one preferred example, the liquid reservoir further comprises processing circuitry configured to: register the thermal runaway event, and control the release of liquid coolant based on the registered thermal runaway event by controlling an actuator coupled to the openable seal to release the liquid coolant. A technical benefit may include a more precise control of when the openable seal is to be opened to release the liquid coolant.

Optionally in some examples, including in at least one preferred example, the processing circuitry is further configured to register the thermal runaway event based on gas pressure data received from a gas pressure sensor and/or temperature data received from a temperature sensor. A technical benefit may include a more precise detection of a thermal runaway event at an early stage, possibly mitigating damages caused.

Optionally in some examples, including in at least one preferred example, the pressure sensor is one or more of a strain gauge pressure sensor, capacitive pressure sensor, piezoelectric pressure sensor, piezoresistive pressure sensor, resonant pressure sensor, optical pressure sensor, electromagnetic pressure sensor, and thermal pressure sensor. A technical benefit may be a more precise reading of a gas pressure in the interior of the battery pack.

Optionally in some examples, including in at least one preferred example, the thermal runaway event is indicated by a gas pressure increase threshold and/or temperature threshold. A technical benefit may include a more precise detection of when the openable seal is to be opened to release the liquid coolant.

Optionally in some examples, including in at least one preferred example, the liquid coolant comprises water. A technical benefit may include that water reduces the risk of thermal runaway spread by interacting with heated particles. Furthermore, water possesses no risk of catching fire, which may be the case for some other coolants.

Optionally in some examples, including in at least one preferred example, the liquid coolant comprises an antifreeze. A technical benefit may include that the liquid coolant is prohibited from freezing in cold climates. This may be especially beneficial in cold climates and/or for stationary systems, as they may possess greater risks of freezing during cold external temperatures.

According to a second aspect a battery pack comprising at least one battery module and the liquid reservoir of the first aspect is provided.

The second aspect of the disclosure may seek to integrate the liquid reservoir with the battery pack to enhance thermal management. A technical benefit may include providing a seamless integration of the liquid reservoir with the battery pack, ensuring a coordinated response to thermal runaway events, which can enhance overall safety and efficiency of the battery system.

Optionally in some examples, the battery pack further comprises at least one additional liquid reservoir. A technical benefit may include an improved space utilization in the interior of the battery pack, as several liquid reservoirs may be deposited in available space. It may also offer an increased cooling outcome.

According to a third aspect a high-voltage component comprising the battery pack of the second aspect is provided.

The third aspect of the disclosure may seek to incorporate the battery pack with the liquid reservoir into a HV component to enhance their safety and thermal management. A technical benefit may include ensuring that HV components are equipped with advanced thermal runaway management, which may improve their operational safety and reliability in high-stress environments.

According to a fourth aspect, an energy storage system comprising the high-voltage component according to the third aspect or the battery pack of the second aspect is provided.

The fourth aspect of the disclosure may seek to incorporate the HV component or the battery pack with the liquid reservoir into an energy storage system to enhance its safety and thermal management. A technical benefit may include providing an energy storage system with integrated thermal runaway management, which may improve overall safety, reliability and efficiency of energy storage solutions in various application.

Optionally in some examples, the energy storage system is a stationary energy storage system. A technical benefit may include that the height limit is more reliable for a stationary energy system, due to the absence of movement of the system.

According to a fifth aspect, a vehicle comprising the energy storage system of the fourth aspect is provided.

The fifth aspect of the disclosure may seek to integrate the energy storage system with enhanced thermal runaway management into a vehicle to improve safety and reliability. A technical benefit may include equipping a vehicle with an advanced energy storage system that effectively manages thermal runaway events, which may enhance the overall safety and operational reliability of the vehicle.

According to a sixth aspect, a method for thermal runaway management is provided, the method comprising: accommodating a liquid coolant in a housing comprising an outlet to an interior of a battery pack having one or more battery modules, and in response to a thermal runaway event occurring in the battery pack, opening an openable seal arranged to seal the outlet to release the accommodated liquid coolant into the interior of the battery pack, wherein at least one of a volume of the housing and a volume of the accommodated liquid coolant is limited by a height limit defined by a terminal circuit of a lowest battery module from among said one or more battery modules.

The sixth aspect of the disclosure may seek to provide a method for managing thermal runaway events in battery packs by controlled release of liquid coolant. A technical benefit may include ensuring more precise control over the volume of liquid coolant released during thermal runaway events, based on the configuration of the battery pack, which can enhance safety while mitigating the risk of dangerous incidents such as explosions.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary schematic illustration of an electric vehicle according to an example.
**FIG. 2** is an exemplary schematic illustration of a battery pack comprising a liquid reservoir accommodating liquid coolant, according to an example.
**FIG. 3** is an exemplary schematic illustration of a battery pack where liquid coolant accommodated in a liquid reservoir has been released into an interior of the battery pack, according to an example.
**FIG. 4** is an exemplary schematic illustration of a liquid reservoir comprising processing circuitry and an actuator according to an example.
**FIG. 5** is an exemplary schematic illustration of a liquid reservoir comprising an openable seal and a cover according to an example.
**FIG. 6** is an exemplary block diagram illustration of a control method according to an example.

### DETAILED DESCRIPTION

The detailed description set forth below provides information and examples of the disclosed technology with sufficient detail to enable those skilled in the art to practice the disclosure.

The general concept as defined herein in the respective aspects of the disclosure may be applicable to battery packs of any stationary or moveable unit. Such units may for example be generators, vehicles, handheld devices or the like. In the context of the present disclosure, examples will sometimes be presented relating to a battery pack in an electric vehicle (EV). It should however be noted that any unit possessing a battery pack may utilize the disclosed technology.

A thermal runaway is a process where an increase in the temperature of a battery or battery pack changes the conditions therein such that a further, uncontrolled, temperature increase is caused. This temperature increase may be started for a number of reasons. For example it may be caused by overcharging or undercharging of the battery pack, a short circuit caused by physical damage, chemical reactions, insufficient cooling, incorrect mixing of battery reactants, pressure buildup in the battery pack, high current loads, and so forth. The thermal runaway may also further damage other battery packs in close proximity, for example due to melting of materials, causing a further thermal runaway event. In this manner, a thermal runaway may spread throughout a battery pack, a high voltage component, or an energy storage system, thereby causing multiple thermal runaway events. While a "thermal runaway" refers to a self-accelerating condition where an increase in temperature causes further increases, potentially leading to destructive outcomes, a "thermal runaway event" specifically denotes the occurrence or instance of this uncontrolled process resulting in damage or failure.

A liquid coolant is introduced to a battery pack in order to decrease or eliminate the effects of the thermal runaway in the single battery pack, or to decrease or eliminate the risk that the thermal runaway spreads as described above. However, it is envisaged that the release of such a liquid coolant may encounter circuitry inside the battery packs. This could lead to chemical decomposition leading to hydrogen gas buildup, thus further damaging the battery pack. The subject matter of this disclosure thereby seeks to mitigate the above-described negative effects by the controlled release of liquid coolant into the interior of the battery pack. The problems referred to above concerning effectively managing thermal runaway events in battery packs can accordingly be solved. This may offer technical benefits relating to a careful control of liquid coolant volume in the battery pack based on the specific layout of the battery cell configuration, ensuring safe containment and effective cooling while mitigating the risk of dangerous incidents such as explosions. This ultimately offers an increased safety and reliability in the event of thermal runaway.

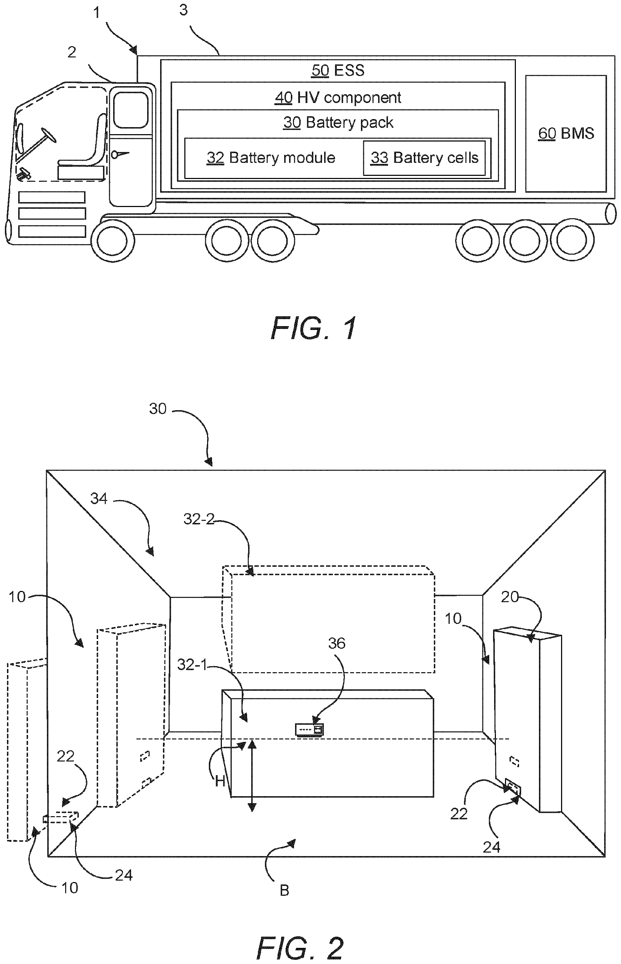

**FIG. 1** is an exemplary schematic illustration of a vehicle **1.** The vehicle **1** is illustrated as a heavy-duty vehicle, in this case a truck. The vehicle **1** is preferably an electric vehicle. In other areas of application other machines typically employing battery systems can be envisaged, such as for buses, marine vessels, construction equipment, personal vehicles, consumer electronics such as smartphones or tablets, home battery storage systems, grid storage systems, drones, satellite systems, portable medical equipment, vacuums, among other areas of application. Essentially, any type of battery using unit that may experience thermal runaway is an example of an area of application. The vehicle **1** comprises a tractor unit **2** which is arranged to tow a trailer unit **3.** While not explicitly shown, the vehicle **1** includes vehicle units and associated functionality as would be understood and expected by a skilled person, such as a powertrain, chassis, and various control systems.

The vehicle **1** comprises an energy storage system, ESS **50.** The ESS **50** is arranged to store electrical energy and release it as needed. The ESS **50** may comprise a high-voltage, HV, component **40.** The HV component **40** is a relative term, and what is considered high voltage may depend on the context. In applicable power systems discussed herein, high voltage typically refers to voltages higher than the standard residential or commercial power distribution levels. Purely by way of example, voltage levels for HV components in traction batteries or fuel cell systems typically range between 200 V and 800 V or more, in DC fast chargers between 600 V and 1000 V, in HEV (Hybrid Electric Vehicles) between 200 and 300 V. The skilled person will appreciate that the voltage level for the HV component **40** is readily adaptable for other HV application areas.

The HV component **40** - or the EES 50 - may comprise a plurality of battery packs **30,** each battery pack **30** having one or more battery modules **32.** The battery modules **32** each carry a set of battery cells **33** responsible for storing energy in chemical form. When chemical reactions occur, electrical energy is harnessed for various application. The battery cell **33** is the fundamental building block of a battery, comprising an anode, cathode, and electrolyte. Multiple battery cells **33** are thus combined to create a battery module **32.** A battery module **32** can carry further components that enable interaction between battery modules **32,** such as communications units and connectors. Multiple battery modules **32,** may in turn be combined to create a battery pack **30,** a modular unit that delivers voltage, capacity, and power for diverse applications. The battery packs **30** may include lithium-ion batteries, lithium iron phosphate batteries, solid-state batteries, graphene batteries, sodium-ion batteries, nickel-cobalt-manganese batteries, aluminum-ion batteries, or other battery types known in the art. The battery packs **30** are rechargeable and adapted to provide a source of electricity for an electric propulsion system (not shown). The battery packs **30** are often arranged in close proximity to one another. The battery modules **32** are often arranged in close proximity to one another inside the battery pack **30.**

The vehicle **1** may comprise a battery management system, BMS **60,** operating in tandem with the ESS **50** by monitoring and managing the individual battery cells **33** within the battery packs **30.** Typically, each battery pack **30** is associated with a BMS controller. Alternatively, the BMS **60** may include a master controller configured to monitor and manage a plurality of battery packs **30.** The BMS **60** may handle functions such as balanced charging and discharging, prevention of overcharging or over-discharging, management of temperatures, and optimizations of overall performance and/or safety. The BMS **60** may decrease or increase the current flowing to and from a battery cell **33** in order to control the temperature therein.

**FIG. 2** is an exemplary schematic illustration of a battery pack **30** according to examples disclosed herein. The battery pack **30** comprises an interior **34** wherein a plurality of modules and elements may be arranged. The battery pack **30** may comprise one or more battery modules **32,** in this particular example two modules **32-1, 32-2.** For reasons of brevity the battery module or battery modules will henceforth be referred to in the plural, even though it might refer only to a single battery module. The battery modules **32** may each provide voltage to the HV component mentioned above. In examples where multiple battery modules **32** are arranged in the battery pack **30,** they may be arranged side-by-side, above one another, or practically anywhere suitable in the interior **34** of the battery pack **30.** However, one or more battery modules **32-1** are arranged closest to the bottom **B** of the battery pack **30.** In some examples, the lowest battery module **32-1** is arranged at a bottom surface of the battery pack **30.** In some further examples, multiple battery modules **32-1** are arranged closest to the bottom **B.** The person skilled in the art will understand that whichever battery module(s) **32-1** is arranged closest to the bottom **B** of the battery pack **30,** out of all battery modules **32** in the battery pack **30,** may be interpreted as a lowest battery module **32-1.** In the prevailing example the battery module **32-1** sits below one other battery module **32-2.** The lowest battery module **32-1** is thus the bottommost module or modules in relation to the bottom **B** of the battery pack **30.**

The battery modules **32** may comprise a number of exposed circuits. In the current disclosure, reference will be made to a terminal circuit **36.** The terminal circuit **36** is any piece of electric circuitry that, if it encounters a liquid, could cause chemical decomposition of the liquid, or which could be damaged by the liquid. For example, the terminal circuitry **36** could be fuses, wires, connectors, conductors, or exposed metal films, to name a few examples. In general, a terminal circuit **36** could be any piece of the battery module **32** in which electrical current is flowing, and which is exposed in the interior **34** of the battery pack **30.** In some examples, the terminal circuit **36** is any such piece of circuitry that is arranged closest to the bottom **B** within the battery pack **30.** In a more preferred example, the terminal circuit **36** is the piece of circuitry arranged closest to the bottom **B,** in the lowest battery module **32-1.**

The interior **34** further comprises at least one liquid reservoir **10** adapted to accommodate a liquid coolant in its housing **20.** In the prevailing example the housing **20** is presented as being essentially box-shaped with vertical and horizontal surfaces. The housing **20** may however comprise one or more of any 3D shape with a volume, such as a cylinder, sphere, cube, cone, rectangular prism, torus, hemisphere, pyramid or ellipsoid, or any combination thereof. To this end, the shape, dimensions and size of the liquid reservoir **10** is not necessarily important.

In some examples the battery pack **30** comprises at least one additional liquid reservoir **10.** Hence, several liquid reservoirs **10** may be arranged fluidly connected to the battery pack **30.** One or more liquid reservoirs **10** may be arranged on the outside of the battery pack **30.** This may be beneficial for cases where there is a limited amount of space in the interior **34** of the battery pack **30,** as arranging the liquid reservoirs **10** on the outside may increase the available space in the interior **34.** One or more liquid reservoirs **10** may be arranged in the interior **34.** In some examples, one or more liquid reservoirs **10** are arranged on the outside of the battery pack **30** and one or more liquid reservoirs **10** are arranged in the interior **34** of the battery pack **30.** This could be beneficial as it can increase the total volume of available liquid coolant that can be released into the interior **34.** In **FIG. 1****,** the liquid reservoir **10** is depicted as sitting on the bottom **B** of the battery pack **30,** although this is a purely exemplary arrangement. The liquid reservoir **10** may be arranged anywhere in the battery pack **30.** It may sit on the top of the battery pack **30,** on a wall of the battery pack **30,** by a top surface of the battery pack **30,** or any other location within or outside of the battery pack **30.**

The liquid reservoir **10** comprises an outlet **22.** The outlet **22** is fluidly connected to the interior **34** such that a liquid may flow from the liquid reservoir **10** and into the interior **34** via the outlet **22.** In an example where the liquid reservoir **10** is arranged in the interior **34** of the battery pack **30,** the outlet **22** may be an opening in the housing **20.** This opening may be drilled, cut, chemically etched, punched, or the like, during manufacturing of the liquid reservoir **10.** The outlet **22** may additionally or alternatively extend into the housing **20,** for example via a fluid connector such as a pipe or tube. In another example, the liquid reservoir **10** is arranged outside of the interior **34.** In such an example the outlet **22** may be a fluid connector such as a pipe or tube comprising a path for the fluid to flow into the interior **34.** In some examples, the outlet **22** is arranged below the terminal circuit **36.** This may be to decrease the risk that liquid coolant splashes onto the terminal circuit **36** during release. In a further example, the outlet **22** is arranged adjacent to the bottom **B** of the battery pack **30.**

The outlet **22** is at least partially covered by an openable seal **24** (for reasons of brevity, openable seal and seal will be used interchangeably hereinafter). In some examples the seal **24** covers the entirety of the outlet **22.** In some examples, the seal **24** fastens a cover over the outlet **22.** The cover may be made of a material that melts or sublimate in temperatures that arise in the battery pack **30** during a thermal runaway event. For example, the cover may be made of a metal such as copper or steel, or a ceramic. Regardless of these examples, the seal **24** is adapted to be openable in response to a thermal runaway event occurring within the battery pack **30.** The seal **24** may comprise a fusible material. The fusible material may have a sublimation point or melting point corresponding to a thermal runaway event. For example, the fusible material may have a sublimation point or melting point between 100-300 °C, for example between 175-225 °C. In some general examples, the fusible material has a sublimation point or melting point that is above temperatures that normally arise in a battery pack, thereby being responsive to an uncontrollable temperature increase caused by a thermal runaway event. Of course, this may vary depending on areas of application of the battery pack **30,** which is why the fusible material may be based on an operational context of the battery pack **30.** The fusible material may be a silicone, a ceramic, a metal, a polymer like polyimide, polybenzimidazole, or any other material with an appropriate melting or sublimation point. The fusible material may for example be a wax material. The wax material may be a wax containing polytetrafluoroethylene, beeswax, carnauba wax or paraffin wax.

When the seal **24** opens, liquid is allowed to move from the liquid reservoir **10** into the interior **34** of the battery pack **30.** This liquid is a liquid coolant. The liquid coolant interacts with heated particles that are inside the battery pack **30,** thus lowering the temperature in the interior **34.** The liquid coolant may comprise water. Water is beneficially used as it has an appropriate vapor point and requires a large amount of energy to vaporize. In some examples, the liquid coolant comprises an antifreeze. In cold climates or where the battery pack **30** is located in an area with lower external temperatures such as a freezer, there might be a need to prohibit the liquid coolant from freezing. This may be due to at least two reasons. Firstly, the liquid coolant needs to flow into the interior **34** of the battery pack **30.** Secondly, some liquid coolants expand when they freeze which may cause damage to the housing **20.**

As mentioned previously, there exists terminal circuitry **36** on the lowest battery module **32-1** that interacts in dangerous or harmful ways with a liquid coolant. For example, water may be subjected to chemical decomposition, producing hydrogen gas. Such hydrogen gas in a high-temperature environment, such as the environment prevailing in the case of a thermal runaway, can cause explosions. Furthermore, a liquid coolant may damage the terminal circuitry **36.** The inventors have therefore realized the need to limit the amount of liquid coolant in the battery pack **30** such that the water level in the battery pack **30** does not reach above a height limit **H.** The height limit **H** is therefore a limit below the terminal circuitry **36,** as is shown in **FIG. 2****.**

It should be noted that terminal circuitry **36** is typically present on other battery modules **32** as well, such as the upper battery module **32-2** shown in the figure. However, the height limit **H** is relevant only for the lowest terminal circuitry **36.** This is because any terminal circuitry **36** positioned above the lowest terminal circuitry **36,** whether on the same lowest battery module **32-1** or another battery module **32-2,** will only be submerged after the lowest terminal circuitry **36** has been submerged. This occurs because the liquid is released to the bottom **B** and rises upwards. Therefore, the focus is directed at the lowest terminal circuitry **36.** By managing liquid coolant submersion with respect to the lowest terminal circuitry **36,** liquid coolant submersion will consequently also be managed for all the other terminal circuitry **36** of the same battery pack **30** due the way the liquid coolant rises in the battery pack **30.** This approach is advantageous as it ensures that all critical components are protected, thereby providing a controlled and effective method for managing thermal runaway.

In some examples, the height limit **H** is a measurable limit, for example in centimeters, that stretches from the bottom **B** of the battery pack **30** to the bottom of the terminal circuitry **36** or specific sensitive or conductive parts on the terminal circuitry **36.** For example, a housing spanning for some length holding the sensitive or conductive parts in place can in some examples be submerged in liquid coolant, while making sure the sensitive or conductive parts are not. At least one of a volume of the housing **20** and a volume of the accommodated liquid coolant is limited by the height limit **H.** Limited by the height limit **H** may entail that liquid coolant which has entered the interior **34** will not have a liquid level that is above the height limit **H.** For example, the volume of the housing **20** may be limited in such a manner that, even if the housing **20** is completely filled with liquid coolant, a resulting liquid level from the liquid coolant leaving the housing **20** and entering the interior **34** will be below the height limit **H.** In an additional or alternative example, the accommodated liquid coolant is of such a volume that the liquid level will be below the height limit **H.** To achieve this several examples can be envisaged. For example, the housing **20** may have limiters, such as one or more strips, markers, barriers, overflow channels, calibrated fill lines, etc., inside that prevent the liquid coolant from reaching above a threshold limit defined by the limiter. Such limiters may be physical limiters or visual limiters that guide a user filling the liquid reservoir **10** with liquid coolant. In another example, the liquid reservoir **10** is pre-filled during construction to accommodate a volume of liquid such that once released into the interior **34** the liquid level will be below the height limit **H.** In some examples, the volume of the housing **20** or the volume of liquid coolant is further based on space in the interior **34** below the height limit **H** that is occupied. For example, the space may be occupied by a part of a battery module **32,** the liquid reservoir itself **10,** or anything else residing in the interior **34** below the height limit **H.** Additionally or alternatively, the height limit **H** does not necessarily stretch from the bottom **B** of the battery pack **30.** For example, there might be an object that covers at least part, or all of, the bottom **B** of the battery pack **30.** In such case, the height limit **H** stretches from the surface of the object. Such an object may for example be a mat, a cover, a plastic film, or anything else that covers a substantial portion of the bottom **B.**

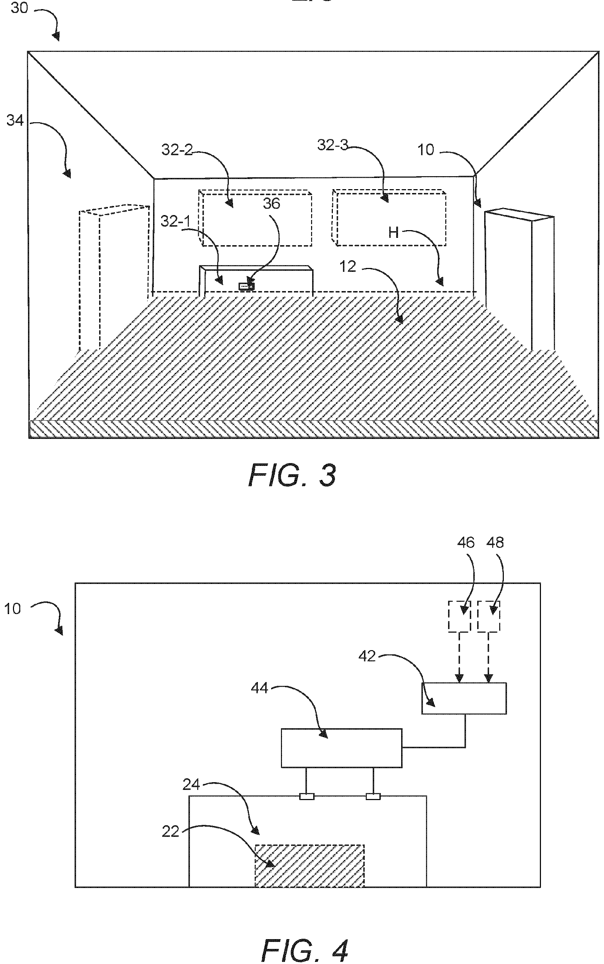

**FIG. 3** shows an exemplary schematic illustration of a battery pack **30.** In this example the openable seal **24** has opened, leading to a release of liquid coolant **12.** In the prevailing example, the liquid level is just below the height limit **H.** It should be noted that the liquid level does not have to reach the height limit **H,** but it can also be exactly at the height limit **H.** This differs depending on area of application, for instance whether the battery pack **30** forms part of a stationary or mobile energy storage system.

In some examples, the liquid level is maintained substantially lower than the height limit **H** to account for dynamic conditions of moving systems, such as marine vessels or vehicles travelling at inclined roads. In some examples, the height limit **H** is based on one or more of a predicted tilt, a predict shake, and a predicted movement. This precaution can be advantageous because the movement of the battery pack **30** can cause the liquid coolant **12** to slosh or shift, potentially making intermittent contact with the terminal circuitry **36.** Furthermore, the liquid level may be tilted due to a tilt of the moving system. By keeping the liquid level substantially lower, for example by a margin that accounts for a possible tilt and/or expected motion of the battery pack **30,** the design can ensure that even during special operating conditions, the liquid coolant **12** will not reach a level that could compromise the terminal circuitry **36.** For instance, if the battery pack **30** is arranged in a moveable system that may tilt up to 15 degrees during operation, the height limit **H** is set low enough to prevent contact with the terminal circuitry **36** even at this maximum tilt.

The liquid coolant **12** may be released from a single liquid reservoir **10** or multiple liquid reservoirs **10.** In some examples, a first liquid reservoir **10** is adapted to release accommodated liquid coolant **12** prior to a second liquid reservoir **10** releasing accommodated liquid coolant **12,** i.e., sequentially. A simultaneous or joint release of liquid coolant can also be envisaged. The second liquid reservoir **10** could have an openable seal comprising a fusible material with a higher sublimation or melting point than the openable seal on the first liquid reservoir **10** to enable a sequential release, or respond to temperature variations differently based on controlled actuation. This behaviour may also be caused by the respective placements of the liquid reservoirs **10** and their openable seals **24.** For instance, a first liquid reservoir **10** arranged within the battery pack **30** or closer to some battery cells 33 causing the thermal runaway can be subjected to a higher temperature compared to a second liquid reservoir **10** arranged outside the battery pack **30,** thereby causing the openable seal of the first liquid reservoir **10** to open first. Even further, as the first liquid reservoir **10** releases its liquid coolant **12,** the openable seal on the second liquid reservoir **10** is covered by liquid coolant. Thus, the second liquid reservoir **10** only releases its accommodated liquid coolant **12** after the liquid coolant in the interior **34** has vaporized or otherwise been removed from the interior **34.** Of course, the examples above may be realized with any number of liquid reservoirs **10,** i.e., sequential, joint or potentially group-wise release of liquid coolant from the respective liquid reservoirs **10.**

**FIG. 4** shows an exemplary schematic illustration of a liquid reservoir **10** comprising processing circuitry **42** and an actuator **44.** The view of the liquid reservoir **10** is a front-view perspective from the battery pack. This side of the liquid reservoir **10** faces the interior of the battery pack. The liquid reservoir **10** in this example comprises processing circuitry **42** connected to an actuator **44.** The actuator **44** is coupled to the openable seal **24** sealing the outlet **22.** The processing circuitry **42** is configured to register a thermal runaway event.

The processing circuitry **42** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **42** may further include computer executable code that controls operation of the programmable device. The processing circuitry **42** may include a memory unit implemented in any known memory technology, including but not limited to E(E)PROM, S(D)RAM or flash memory. In some examples, the memory unit can be integrated with or internal to the processing circuitry **42.** The memory unit may store program instructions for execution by the processing circuitry **42,** as well as temporary and permanent data used by the processing circuitry **42.** The processing circuitry **42** may be connected (e.g., networked) to other machines in a wired or wireless configuration, such as a LAN (Local Area Network), LIN (Local Interconnect Network), automotive network communication protocol (e.g., FlexRay), an intranet, an extranet, or the Internet. The processing circuitry **42** may further communicate with other devices by various system architectures, such as directly or via a Controller Area Network (CAN) bus, etc.

In some examples, the processing circuitry **42** may be connected to one or more sensors **46, 48** capable of measuring data relating to a thermal runaway event. In this example, registering the thermal runaway event comprises the processing circuitry **42** being configured to receive data from the sensors **46, 48** indicating a thermal runaway event. The sensors **46, 48** may be pressure sensors or temperature sensors, or potentially other sensor types such as voltage sensors, current sensors, smoke sensors, acoustic sensors, infrared sensors, optical sensors, thermal imaging sensors, chemical sensors, etc. The sensors **46, 48** are in the shown example depicted as being arranged on the liquid reservoir **10.** However, the sensors **46, 48** may be arranged anywhere in the interior of the battery pack, or on the outside of the battery pack. The sensors **46, 48** may further be arranged inside the housing of the liquid reservoir **10.**

In some examples, the sensor **46** is a pressure sensor **46.** As the thermal runaway event occurs, there may be an increase of gas inside the battery pack, leading to an increase in pressure. There may also be an increase in pressure due to the fact that an increased temperature leads to higher pressure. As such, a thermal runaway event may be indicated by a gas pressure increase. The pressure sensor **46** sends gas pressure data to the processing circuitry **42** indicating a thermal runaway event. The gas pressure data may be indicative of an increase of pressure, or a value of current pressure. The pressure sensor **46** may be any sensor that collects measurements indicating a pressure or an increase or decrease in pressure, such as a strain gauge pressure sensor, capacitive pressure sensor, piezoelectric pressure sensor, piezoresistive pressure sensor, resonant pressure sensor, optical pressure sensor, electromagnetic pressure sensor, and thermal pressure sensor.

In some examples, the thermal runaway event may also be indicated by a temperature or a temperature increase rate. For reasons mentioned above, the temperature inside the battery pack is increased during a thermal runaway event. During a thermal runaway event, the temperature increases rapidly, causing the interior of the battery pack to eventually reach very high temperatures. A temperature sensor **48** may capture temperature increase or the temperature inside the battery pack. In one example, the thermal runaway event is indicated by a temperature above approximately 150 °C. In another example, the thermal runaway event is indicated by a temperature increase rate above approximately 17 °C per minute. The temperature sensor **48** may be one or more of a thermocouple sensor, resistance temperature detector (RTDs), thermistor sensor, infrared sensor, semiconductor temperature sensor, bimetallic sensor, liquid-in-glass thermometer, thermopile sensor, fiber optic temperature sensor, and thermochromic liquid crystal sensor.

Additionally or alternatively, in an example not shown, the processing circuitry **42** is configured to receive data from the BMS **60** indicating a thermal runaway event.

The processing circuitry **42** may be further configured for bidirectional communication with the BMS **60.** For example, the processing circuitry **42** may communicate to the BMS **60** that a thermal runaway event is taking place in a battery pack **30.** This information may be further communicated to a user. The BMS **60** may also, in response to the processing circuitry **42** indicating a thermal runaway, initiate further release of liquid coolant in adj acent battery packs by way of communicating with processing circuitry **42** in another battery pack. This might reduce the risk of a spread of the thermal runaway event.

The actuator **44** is coupled to the openable seal **24,** and the openable seal **24** covers the outlet **22.** The actuator **44** is adapted to move the openable seal **24** away from the outlet **22.** When a thermal runaway event is detected, for instance by any of the sensors **46, 48,** the processing circuitry **42** is configured to send an opening signal to the actuator **44.** The opening signal may be sent by any of the methods and systems mentioned above. In response to receiving the opening signal, the actuator **44** is designed to move the openable seal **24** away from the outlet **22,** enabling the release of the liquid coolant into the interior. The movement of the openable seal **24** can be achieved through various mechanisms, including lifting, swinging, pivoting, tilting, or sliding, depending on the type of actuator **44** used. Alternatively or additionally, the type of movement may depend on the type of coupling between the actuator **44** and the openable seal **24.** A mechanical linkage can connect the actuator **44** to the openable seal **24,** facilitating the physical displacement required to open the seal **24.** Options for actuators include electric motors, hydraulic actuators, pneumatic actuators, solenoid actuators, or the like.

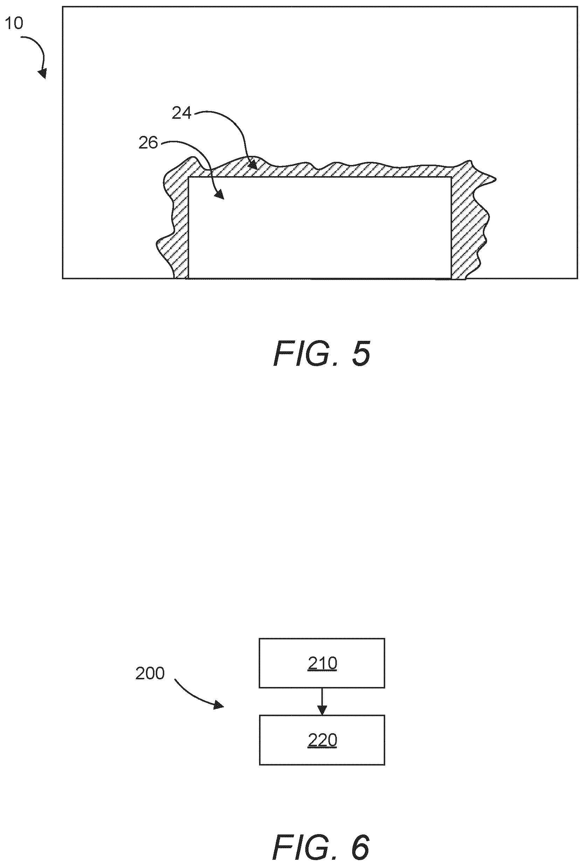

**FIG. 5** shows an exemplary schematic illustration of a liquid reservoir **10** comprising an openable seal **24** and a cover **26.** The perspective is the same as described in **FIG. 4****.** The openable seal **24** covers the inlet by fastening a cover **26** over it. The openable seal **24** comprises a fusible material which melts or sublimates in response to a thermal runaway event, as described above. When the seal **24** melts or sublimates the cover **26** will fall off, releasing a liquid coolant into the interior of the battery pack. In another example, the openable seal **24** completely covers the outlet **22,** eliminating the need for a cover **26.** The cover **26** may be of any fusible material mentioned in conjunction with **FIG. 2****.**

**FIG. 6** is an exemplary flowchart of a method **200** according to an example. The method **200** comprises accommodating **210** a liquid coolant in a housing. The housing comprises an outlet to an interior of a battery pack having one or more battery modules. In response to a thermal runaway event occurring in the battery pack, the method further comprises opening **220** an openable seal arranged to seal the outlet to release the accommodated liquid coolant into the interior of the battery pack. The amount of liquid coolant that is released is controlled by at least one of a volume of the housing and a volume of the accommodated liquid coolant being limited by a height limit defined by a terminal circuit of a lowest battery module from among said one or more battery modules.

The method **200** may be carried out by a liquid reservoir according to aspects and examples described above.

The operational actions described in any of the exemplary aspects herein are described to provide examples and discussion. The actions may be performed by hardware components, may be embodied in machine-executable instructions to cause a processor to perform the actions, or may be performed by a combination of hardware and software.
Example 1: A liquid reservoir (10) for thermal runaway management, comprising: a housing (20) adapted to accommodate a liquid coolant (12), the housing (20) comprising an outlet (22) to an interior (34) of a battery pack (30) comprising one or more battery modules (32); and an openable seal (24) arranged to seal the outlet (22), wherein in response to a thermal runaway event occurring in the battery pack (30), the openable seal (24) is configured to release accommodated liquid coolant (12) into the interior (34) of the battery pack (30), and wherein at least one of a volume of the housing (20) and a volume of the accommodated liquid coolant (12) is limited by a height limit (H) defined by a terminal circuit (36) of a lowest battery module (32-1) from among said one or more battery modules (32).
Example 2: The liquid reservoir of example 1, wherein the openable seal (24) comprises a fusible material having a melting point or sublimation point corresponding to a temperature threshold.
Example 3: The liquid reservoir (10) of example 2, wherein the openable seal (24) completely covers the outlet (22).
Example 4: The liquid reservoir (10) of example 2 or 3, wherein the fusible material is a wax material.
Example 5: The liquid reservoir (10) of any of examples 1-5, wherein the liquid reservoir (10) is arranged in the interior (34) of the battery pack (30).
Example 6: The liquid reservoir (10) of any of examples 1-4, wherein the liquid reservoir (10) is arranged on an outside of the battery pack (30).
Example 7: The liquid reservoir (10) of any of examples 1-6, wherein the outlet (22) is arranged below the terminal circuit (36) of the lowest battery module (32-1).
Example 8: The liquid reservoir (10) of any of examples 1-7, wherein the housing (20) defines a volume where the liquid coolant (12) is adapted to be accommodated, said volume being limited by the height limit (H).
Example 9: The liquid reservoir (10) of any of examples 1-8, wherein a volume of liquid coolant (12) is accommodated in the housing (20), and wherein the volume of liquid coolant (12) is predetermined based on the height limit (H).
Example 10: The liquid reservoir (10) of any of examples 1-9, wherein the outlet (22) is arranged adjacent to a bottom (B) of the battery pack (30).
Example 11: The liquid reservoir (10) of any of examples 1-10, further comprising processing circuitry (42) configured to: register the thermal runaway event, and control the release of liquid coolant (12) based on the registered thermal runaway event by controlling an actuator (44) coupled to the openable seal (24) to release the liquid coolant (12).
Example 12: The liquid reservoir (10) of example 11, wherein the processing circuitry (42) is further configured to register the thermal runaway event based on gas pressure data received from a gas pressure sensor (46) and/or temperature data received from a temperature sensor (48).
Example 13: The liquid reservoir (10) of example 12, wherein the pressure sensor (46) is one or more of a strain gauge pressure sensor, capacitive pressure sensor, piezoelectric pressure sensor, piezoresistive pressure sensor, resonant pressure sensor, optical pressure sensor, electromagnetic pressure sensor, and thermal pressure sensor.
Example 14: The liquid reservoir (10) of any of examples 1-13, wherein the thermal runaway event is indicated by a gas pressure increase threshold and/or temperature threshold.
Example 15: The liquid reservoir (10) of any of examples 1-14, wherein the liquid coolant (12) comprises water.
Example 16: The liquid reservoir (10) of any of examples 1-15, wherein the liquid coolant (12) comprises an antifreeze.
Example 17: A battery pack (30) comprising at least one battery module (32) and the liquid reservoir (10) of any of examples 1-16.
Example 18: The battery pack (30) of example 18, further comprising at least one additional liquid reservoir (10) of any of the examples 1-16.
Example 19: A high-voltage component (40) comprising the battery pack (30) of any of examples 17-18.
Example 20: An energy storage system (50) comprising the high-voltage component (40) of examples 19 or the battery pack (30) of any of examples 17-18.
Example 21: The energy storage system (50) of example 20, being a stationary energy storage system.
Example 22: A vehicle (1) comprising the energy storage system (50) of example 21.
Example 23: A method (200) for thermal runaway management, comprising: accommodating (210) a liquid coolant (12) in a housing (20) comprising an outlet (22) to an interior (34) of a battery pack (30) having one or more battery modules (32); and in response to a thermal runaway event occurring in the battery pack (30), opening (220) an openable seal (24) arranged to seal the outlet (22) to release the accommodated liquid coolant (12) into the interior (34) of the battery pack (30), wherein at least one of a volume of the housing (20) and a volume of the accommodated liquid coolant (12) is limited by a height limit (H) defined by a terminal circuit (36) of a lowest battery module (32-1) from among said one or more battery modules (32).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A liquid reservoir (10) for thermal runaway management, comprising:
a housing (20) adapted to accommodate a liquid coolant (12), the housing (20) comprising an outlet (22) to an interior (34) of a battery pack (30) comprising one or more battery modules (32); and
an openable seal (24) arranged to seal the outlet (22), wherein
in response to a thermal runaway event occurring in the battery pack (30), the openable seal (24) is configured to release accommodated liquid coolant (12) into the interior (34) of the battery pack (30), and wherein at least one of a volume of the housing (20) and a volume of the accommodated liquid coolant (12) is limited by a height limit (H) defined by a terminal circuit (36) of a lowest battery module (32-1) from among said one or more battery modules (32).

2. The liquid reservoir (10) of claim 1, wherein the openable seal (24) comprises a fusible material having a melting point or sublimation point corresponding to a temperature threshold.

3. The liquid reservoir (10) of claim 2, wherein the openable seal (24) completely covers the outlet (22).

4. The liquid reservoir (10) of any of claims 1-3, wherein the liquid reservoir (10) is arranged in the interior (34) of the battery pack (30).

5. The liquid reservoir (10) of any of claims 1-3, wherein the liquid reservoir (10) is arranged on an outside of the battery pack (30).

6. The liquid reservoir (10) of any of claims 1-5, wherein the outlet (22) is arranged below the terminal circuit (36) of the lowest battery module (32-1).

7. The liquid reservoir (10) of any of claims 1-6, wherein the outlet (22) is arranged adjacent to a bottom (B) of the battery pack (30).

8. The liquid reservoir (10) of any of claims 1-7, further comprising processing circuitry (42) configured to:
register the thermal runaway event, and
control the release of liquid coolant (12) based on the registered thermal runaway event by controlling an actuator (44) coupled to the openable seal (24) to release the liquid coolant (12).

9. A battery pack (30) comprising at least one battery module (32) and the liquid reservoir (10) of any of claims 1-8.

10. The battery pack (30) of claim 9, further comprising at least one additional liquid reservoir (10) of any of the claims 1-8.

11. A high-voltage component (40) comprising the battery pack (30) of any of claims 9-10.

12. An energy storage system (50) comprising the high-voltage component (40) of claim 11 or the battery pack (30) of any of claims 9-10.

13. The energy storage system (50) of claim 12, being a stationary energy storage system.

14. A vehicle (1) comprising the energy storage system (50) of claim 12.

15. A method (200) for thermal runaway management, comprising:
accommodating (210) a liquid coolant (12) in a housing (20) comprising an outlet (22) to an interior (34) of a battery pack (30) having one or more battery modules (32); and
in response to a thermal runaway event occurring in the battery pack (30), opening (220) an openable seal (24) arranged to seal the outlet (22) to release the accommodated liquid coolant (12) into the interior (34) of the battery pack (30), wherein
at least one of a volume of the housing (20) and a volume of the accommodated liquid coolant (12) is limited by a height limit (H) defined by a terminal circuit (36) of a lowest battery module (32-1) from among said one or more battery modules (32).
